# EUROPEAN PATENT SPECIFICATION

(11) **EP 4 112 384 B1**
(45) Date of publication and mention of the grant of the patent: **14.10.2026**
(21) Application number: 22181946.9
(22) Date of filing: 29.06.2022
(51) Int. Cl.: B60Q 5/00, G10K 15/02, B06B 1/02

(54) **ROAD VEHICLE EQUIPPED WITH A REPRODUCTION DEVICE FOR THE REALIZATION OF A SOUND THAT CAN BE ASSOCIATED WITH AN ELECTRIC MOTOR AND RELATED METHOD**
STRASSENFAHRZEUG MIT EINEM WIEDERGABEGERÄT ZUR REALISIERUNG EINES MIT EINEM ELEKTROMOTOR VERBINDBAREN GERÄUSCHES UND ENTSPRECHENDES VERFAHREN
VÉHICULE ROUTIER ÉQUIPÉ D'UN DISPOSITIF DE REPRODUCTION POUR LA RÉALISATION D'UN SON POUVANT ÊTRE ASSOCIÉ À UN MOTEUR ÉLECTRIQUE ET PROCÉDÉ ASSOCIÉ

(30) Priority: 01.07.2021 IT 202100017408
(43) Date of publication of application: 04.01.2023
(73) Proprietor: FERRARI S.p.A., 41100 Modena (IT)
(72) Inventor: BETRO', Roberto, 41100 MODENA (IT); ABBIATI, Andrea Benoit, 41100 MODENA (IT); SITTA, Ugo, 41100 MODENA (IT); ARCANGELI, Samuele, 41100 MODENA (IT); POGGIO, Luca, 41100 MODENA (IT)
(74) Representative: Studio Torta S.p.A.

(56) References cited:
- DE-A1- 102010 043 973
- DE-A1- 102015 208 211
- DE-A1- 102021 111 048
- GB-A- 2 509 132
- US-A1- 2010 134 058
- US-A1- 2014 177 866
- US-A1- 2016 205 472
- US-B1- 10 319 360

## Description

### CROSS-REFERENCE TO RELATED APPLICATIONS

This patent application claims priority from Italian patent application no. 102021000017408 filed on July 1, 2021.

### TECHNICAL SECTOR

The invention relates to a road vehicle equipped with a reproduction device for the realization of a sound that can be associated with an electric motor and to a related method.

### PRIOR ART

In a high-performance sports car, the sound produced by the engine (usually, an internal combustion engine) and perceived inside the passenger compartment is important, for a significant part of the *"driving pleasure"* of a high-performance sports car is due to the very sound produced by the engine.

Furthermore, the sound generated by the engine allows drivers to have an immediate feedback on the conditions of the vehicle and on what, for example while driving on a track, has to be done in order to reach given performances.

Furthermore, among the main features of the sound produced by the engine and perceived inside the passenger compartment there are not only the intensity of the sound, but also the *"quality"* of the sound itself (namely, the sound produced by the engine and perceived inside the passenger compartment not only needs to be *"strong",* but also has to be "*good*").

Due to the recent development of electric drive cars, traditional internal combustion engines have been replaced by electric machines (hereinafter also referred to as electric motors), which, however, are extremely quiet, thus reducing the driving pleasure in high-performance vehicles. As a matter of fact, they do not produce a characteristic sound, which can be enjoyed by a driver of a high-performance car.

As a consequence, in high-performance sports car, the sound produced by an electric motor is not perceived inside the passenger compartment or, anyway, can be at least partially disappointing.

Document US 10 319 360 B1 describes methods and systems for masking tonal noise in electric or hybrid electric vehicles having an electric motor, wherein a current, having a suitable combination of harmonics, is injected into the driving electrical motor in order to cause the electric motor to generate a desired sound.

Document US 2014/177866 A1 describes a system and a method to generate simulated sounds associated with operation of a multi-gear vehicle based on electric motor vehicle operating conditions, wherein the simulated sounds are generated associated with operations of accelerating and decelerating the vehicle and comprise harmonics.

### DESCRIPTION OF THE INVENTION

The object of the invention is to provide a road vehicle equipped with a reproduction device for the realization of a sound that can be associated with an electric motor and a related method, which are easy and economic to be manufactured and implemented and are at least partially free from the drawbacks discussed above, namely allow the driver and the passengers to enjoy, inside the passenger compartment, a quality sound, which, hence, is very pleasant for them.

According to the invention, there are provided a road vehicle equipped with a reproduction device for the realization of a sound that is associated with an electric motor and a related method as claimed in the appended claims.

The appended claims describe preferred embodiments of the invention and form an integral part of the description.

### BRIEF DESCRIPTION OF THE DRAWINGS

The invention will now be described with reference to the accompanying drawings showing a non-limiting embodiment thereof, wherein:
- figure 1 is a schematic view of a car according to the invention;
- figure 2 is a possible embodiment of a control diagram of an electric motor of the vehicle of figure 1;
- figure 3 is a view of some experimental results, which prove the effects of the invention.

### PREFERRED EMBODIMENTS OF THE INVENTION

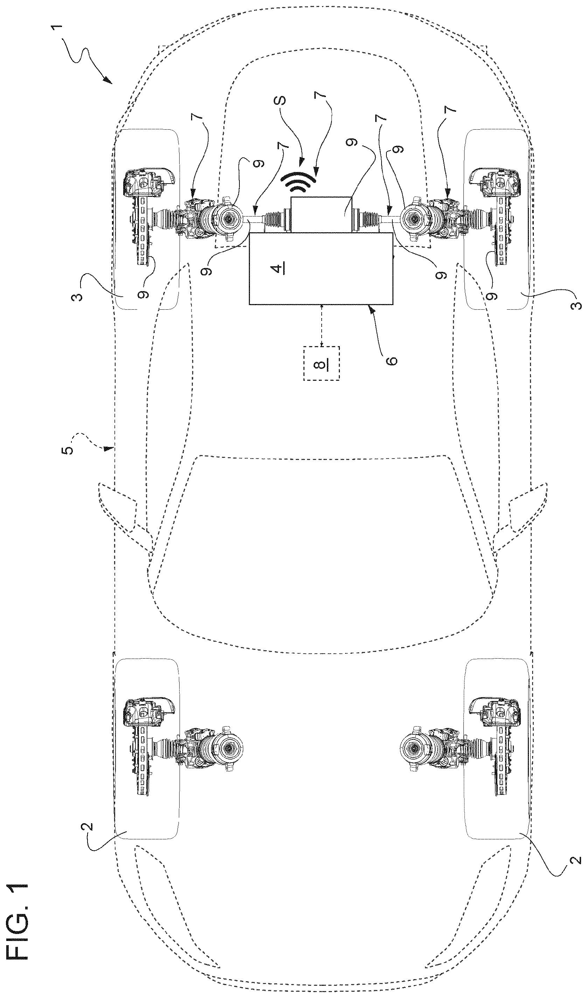

In figure 1, number 1 indicates, as a whole, a car provided with two front wheels 2 and two rear drive wheels 3, which receive the torque from a an electric motor 4 arranged in a rear position. The car 1 is provided with a passenger compartment 5 which is designed to house the driver and possible passengers. In other embodiments, the electric motor 4 can obviously be arranged in a front position.

According to figure 1, the car 1 comprises an acoustic system 6, which has the function of generating a sound through the electric motor 4, so that the sound perceived by the people seating in the passenger compartment 5 of the car 1 is *"pleasant",* namely corresponds to the desires/expectations of the occupants of the passenger compartment 5 of the car 1, and/or is useful while driving in order to understand the conditions of the motor.

The acoustic system 6 comprises at least one reproduction device 7, which generates the sound that is associated with the electric motor 4 and diffuses the sound itself towards the passenger compartment 5 and out of the vehicle 1.

Therefore, the acoustic system 6 comprises the electric motor 4, which is mechanically connected to the reproduction device 7 so as to be able to excite a resonant frequency thereof.

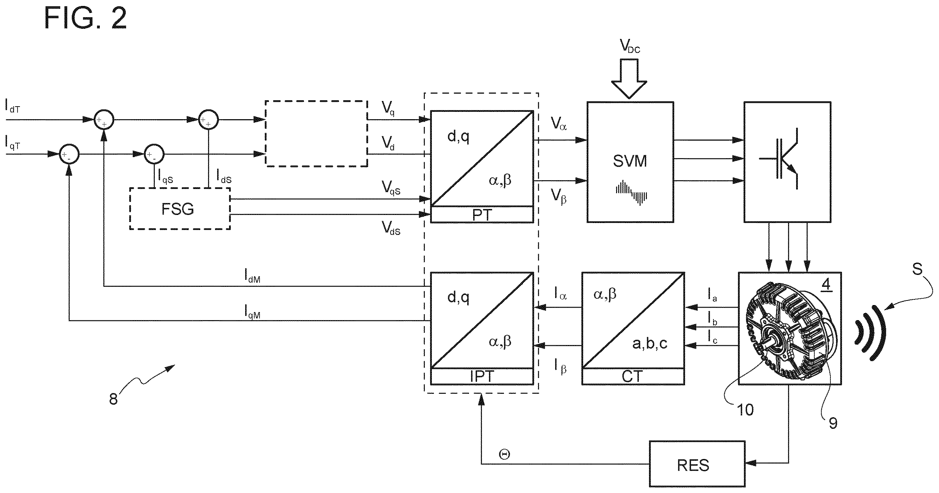

Furthermore, the acoustic system 6 comprises a control unit 8 configured to control the electric motor 4 so as to inject at least one sonority current I_{qS}, I_{dS} (direct and in quadrature) or voltage V_{qS}, V_{dS} (hereinafter also simply referred to as sonority signal, for the sake of brevity), as an input, into the electric motor 4 (see, for example, figure 2). In particular, the sonority signal (namely, the sonority current I_{q}s, I_{dS}) excites a frequency, which determines a vibration of the reproduction device 7, which emits, due to the vibration, in the form of acoustic waves, a sound S as a function of the injected sonority current I_{q}s, I_{dS} or voltage V_{qS}, V_{dS}.

In particular, the generated sound is associated with the electric motor 4. More in particular, the generated sound S is such that it is perceived from the outside and from the inside of the vehicle 1 as deriving from the dynamics of the electric motor 4 (so as to recall the sensation generated by the dynamics of an internal combustion engine).

The features indicated below relating to the sonority current I_{q}s, I_{dS} also apply to the sonority voltage V_{qS}, V_{dS}.

In particular, the reproduction device 7 is determined by a mechanical resonant element 9, preferably already present on board the road vehicle 1. More in particular, the mechanical resonant element 9 is any element of an electric transmission comprising the electric motor 4, namely mechanically connected to the stator of the electric motor 4 or the stator itself. For example, the mechanical element 9 is an axle, a gearbox, a differential, a rim of a wheel, a lid of a cable raceway, a support, a plug of an axle, a fixing bar, etcetera. In this way, no additional components have to be installed.

Advantageously, though not necessarily, the resonant element 9 is a metal element.

Is some non-limiting cases, the resonant element 9 is an element made of a plastic or composite material.

In the non-limiting embodiment of figure 1 or 2, the electric motor 4 is configured to cause the rotation of the rear drive wheels 3. In other non-limiting cases, the vehicle 1 comprises two electric motors 4, one for each drive wheel.

In other non-limiting embodiments, the motor 4 is an additional motor added to the one needed to move the road vehicle 1.

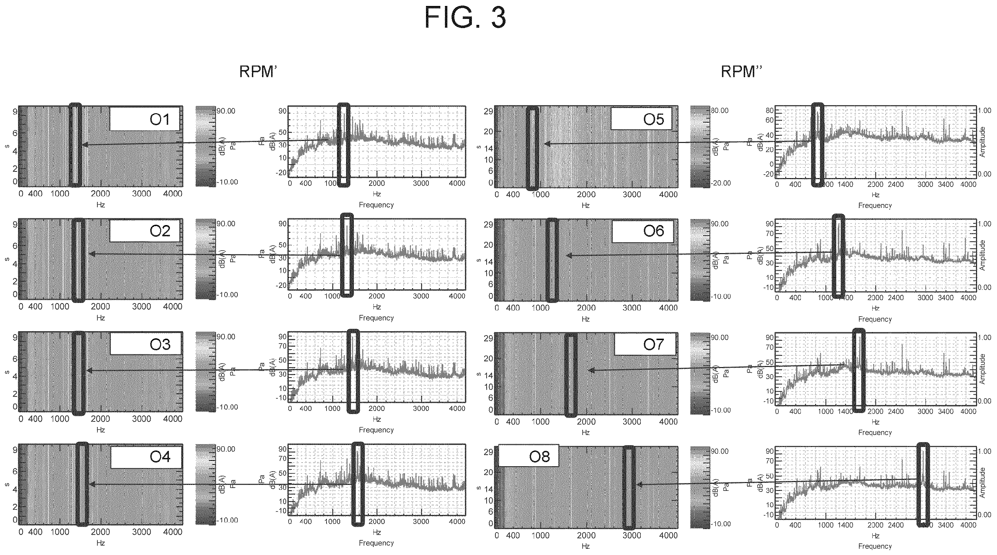

Advantageously, though not necessarily, therefore, the control unit 8 injects, simultaneously with the sonority current I_{q}s, I_{dS}, a current I_{qT}, I_{dT} of movement (namely, the reference currents shown in the diagram of figure 3), which determines the rotation of a rotor 10 of the electric motor 4 and, hence, of the drive wheels 3 connected thereto, thus controlling the movement of the vehicle 1. Alternatively, the control unit 8 injects, simultaneously with the sonority voltage V_{qS}, V_{dS}, a voltage V_{qT}, V_{dT} of movement (namely, the reference voltages shown downstream of a PI controller, for example a proportional-integral controller, in the diagram of figure 3), which determines the rotation of the rotor 10 of the electric motor 4 and, hence, of the drive wheels 3 connected thereto, thus controlling the movement of the vehicle 1.

According to some preferred, though non-limiting embodiments, the sonority current I_{q}s, I_{dS} has a frequency such that it does not interact with a magnetic flux of the electric motor 4, thereby avoiding generating movements of the rotor 10 and, hence, of the drive wheels 3. In this way, the injection of the harmonics of current I_{q}s, I_{dS} that give a sound contribution is independent of the speed of the motor 4. In other words, the control unit 8 is capable of controlling the electric motor 4 so as to emit the sound S even when the motor 4 is still or the rotor 10 has a constant speed. Therefore, in these cases, the injection of the sonority current I_{q}s, I_{dS} added to (overlapping) the current I_{qT}, I_{dT} of movement only allows the electric machine to make a sound, without determining movements or error in the movement of the road vehicle 1.

According to some non-limiting embodiments, the sonority current I_{q}s, I_{dS} comprises (is) a harmonic signal with a square waveform or with a non-sinusoidal form.

According to other preferred non-limiting embodiments, the sonority current I_{q}s, I_{dS} comprises (is) a sinusoidal harmonic signal. In particular, the sinusoidal form of the harmonic current signal provides the resonant element 9 with a greater resonance stimulus, allowing, at the same time, the sound S to gain a better quality compared to harmonics with a square waveform.

The sonority current I_{q}s, I_{dS} comprises a plurality of harmonics with different order and/or amplitude and/or frequency. In this way, a polyphonic sound S can be generated, determining the vibration of different resonant elements 9. In particular, by injecting sonority currents I_{q}s, I_{dS} in a plurality of harmonics of different order, it is possible to excite the resonant frequencies of different elements 9, which, by vibrating, generate different sounds S (in particular, notes). By so doing, chords can be generated, thus enriching the sounds S. Hence, in other words, the control unit 8, through the electric motor 4, is capable of exciting different orders overlapping different harmonics within the sonority signals I_{q}s, I_{dS}, thus obtaining a polyphony. Therefore, the vehicle 1 is able to generate, through the motor 4, multi-frequency/multi-amplitude signals, which simultaneously excite different orders of harmonics.

According to some preferred non-limiting embodiments, the control unit 8 is configured to vary the sonority current I_{q}s, I_{dS} as a function of vehicular conditions, for example road roughness and/or open or closed sunroof. In other words, the control unit 8 is configured to change the order, the amplitude or the frequency of the harmonic of the sonority current I_{q}s, I_{dS}, emitting a different sound as the conditions of the vehicle change.

According to a possible embodiment, the control unit 8 is configured to vary the sonority current I_{q}s, I_{dS} as a function of driving parameters.

In some non-limiting cases, the control unit 8 is configured to detect the driving style of a driver according to known techniques, which, therefore, are not discussed in detail below; in particular, the control unit 8 s configured to vary the sonority signal I_{q}s, I_{dS} as a function of the driving style of the driver.

In particular, as a function of the aforesaid driving parameters or vehicular conditions, the sonority signals can be varied so as to best adjust the sound reproduction that is associated with the electric motor 4 to the driving situation themselves. For instance, the sonority signal could change as a function of the engaged gear (lower gears correspond to a more intense and low-frequency sound that can be associated with the electric motor 4), the position of the accelerator pedal (the more the accelerator pedal is pressed, the more intense the sound that can associated with the electric motor 4 is), the driving mode chosen through the suitable selector (commonly called *"hand lever",* a sports/racing driving mode corresponding to a more intense sound that can be associated with the electric motor 4), the position of a possible sunroof (the sound that can be associated with motor 4 is more intense when the sunroof is open), the first time derivative of the speed of rotation of the electric motor 4 (the sound that can be associated with the electric motor 4 becomes more intense as the derivative increases).

Advantageously, though not necessarily, the sonority current I_{q}s, I_{dS} is configured to excite the reproduction device 7 to generate an increasing or decreasing sonic ramp. In particular, the sonic ramp is adjusted as a function at least of the acceleration of the road vehicle. In this way, in accordance with the acceleration, the sound S is more intense and acute as the acceleration of the vehicle increases, and vice versa.

In some non-limiting cases, the control unit 8 is configured to stimulate the resonances of the element 9 through the direct sonority component I_{qS}. Alternatively or in addition, the control unit 8 is configured to select the order within the structural resonance.

According to a second aspect of the invention, there is provided a method for the realization of a sound S that is associated with an electric motor 4 in the road vehicle 1.

In particular, the method comprises the steps of:
- injecting the sonority current I_{q}s, I_{dS}, as an input, into the electric motor; wherein the sonority current I_{q}s, I_{dS}, excites a frequency resulting in a vibration the mechanical resonant element 9 already present on board the road vehicle; wherein the resonant element 9 emits, due to the vibration, in the form of acoustic waves, a sound S as a function of the injected sonority current I_{q}s, I_{dS}.

Furthermore, the method preferably entails preliminarily defining (in a designing phase) the resonance orders of the components of the electric transmission system, so as to accordingly calculate the orders of the harmonics that, through resonance, can emit given notes, exciting, through vibration, the aforesaid components.

In particular, the harmonic order needed to emit a given sound S depends on the type of electric motor and on the structure connected to the latter (for example, the electric transmission system).

Advantageously, though not necessarily, the method further entails experimentally carrying out a "tuning" of the sonority current I_{q}s, I_{dS} so as to centre the resonance bands as a function of the electric transmission system.

In particular, to sum up, the control unit 8 is configured to control (for example, by means of a known inverter) the electric motor 4 so as to apply voltages at the ends of the inverter, which generate sinusoidal current forms according to the description above. More in particular, sinusoidal harmonics are caused to overlap the currents I_{qT}, I_{dT} of movement and said sinusoidal harmonics excite the structural resonances of the electric transmission system or of the electric motor 4 itself. Said harmonics are further modulated in amplitude and frequency to generate the sound S. Preferably, these harmonics have a frequency such that they do not interact with a magnetic flux of the electric motor 4, thus being filtered by the latter. In particular, said harmonics belong to a different order than the harmonics of movement.

The non-limiting embodiment of figure 2 shows a schematic representation of the control diagram used to control the electric motor 4 so as to emit the sound S.

In particular, a sonority generation block FGS adds, to the currents I_{qT}, I_{dT} of movement, the sonority currents I_{q}s, I_{dS} inputted to a proportional-integral controller PI, which processes the voltage signals V_{d}, V_{q} (direct and in quadrature), which are total voltage signals (or, in some embodiments, signals of sole movement). In any case, the sonority voltage signals V_{dS}, V_{qS} are added to the signals of movement and are subsequently sent to the electric motor 4 according to a known diagram, which is partly shown in figure 2, wherein PT and IPT indicate Park transform and the inverse transform thereof, respectively, CT indicates Clarke transform, RES indicates a resolver and, therefore, θ indicates the position of the rotor. In particular, block SVM indicates an example of modulation, in this case the space vector modulation (namely, the known algorithm used to control the PWM of an electric motor), which receives, as an input, a reference V_{DC} for the modulated discretization of the input signal. Finally, the feedback currents I_{dM}, I_{qM} indicate the measured stator currents.

As the speeds of the rotor 10 of the electric motor 4 change, the orders of the harmonics used for the sonority currents I_{q}s, I_{dS} change as well (namely, are changed by the control unit 8). In particular, though not in a limiting manner, as the speed of the rotor 10 of the electric motor 4 increases, the orders of the harmonics used for the sonority currents I_{q}s, I_{dS} decrease and/or vice versa. In this way, the quality of the sound emitted by the resonant element 9 is better, avoiding disturbances relating to the speed of the motor 10.

Figure 3 shows examples of the results obtained by the vehicle or by the method according to the invention. In particular, figure 3 shows the samples of sounds S generated by injecting, at given speeds RPM', RPM" of the rotor 10, sonority currents I_{q}s, I_{dS} with different orders (01-04 at the speed RPM' and O5-O8 at the speed RPM''). In particular, RPM' corresponds to a speed of circa 1200 revolutions per minute and O1-O4 are orders greater than the fifteenth one, in particular greater than the twentieth one. Furthermore, RPM" corresponds to a speed of circa 8000 revolutions per minute and O5-O8 are orders smaller than the fifteenth one, in particular smaller than the tenth one. As you can see, the vehicle 1 is able to modulate the sonority current I_{q}s, I_{dS} so as to produce sounds S with intensities that are even equal to or greater than 90 dB.

Even though the invention described above relates to a specific embodiment, it should not be considered as limited to said embodiment, for its scope of protection also includes all those variants, changes or simplifications covered by the appended claims, such as for example a different type of arrangement, a different type of materials, a different geometric configuration, etc.

The embodiments described herein can be combined with one another, without for this reason going beyond the scope of protection of the invention, as defined by the appended claims.

The method and the vehicle 1 described above have numerous advantages.

First of all, the acoustic system 6 generates a sound through the electric motor 4 by exciting structural resonances with multiple sinusoidal harmonics, which make the sound pleasant (and, hence, welcome) for the occupants of the passenger compartment.

Furthermore, the acoustic system 6 is simple and economic to be manufactured, since its creation does not affect components already present in the car 1, changing them (and, hence, significantly increasing manufacturing costs for the adjustment of already produced mechanical parts), but it simply requires an implementation from a software point of view and, if necessary, the addition of small-size devices and units with a limited weight.

Finally, the acoustic system 6 ensures a reliable feedback, which can immediately be used by the driver of the road vehicle 1, who, despite driving a car provided with an electric motor and, hence, quiet, can understand the conditions of the vehicle using the hearing.

### LIST OF THE REFERENCE NUMBERS OF THE FIGURES

- 1: vehicle
- 2: front wheels
- 3: rear wheels
- 4: electric motor
- 5: passenger compartment
- 6: acoustic system
- 7: reproduction device
- 8: control unit
- 9: resonant element
- 10: rotor
- CT: Clarke transform
- _{D, Q}: direct and quadrature
- F_{sG}: sonority generator
- I_{dM}: measured current
- I_{dS}: sonority current
- I_{dT}: current of movement
- IPT: Park inverse transform
- I_{qM}: measured current
- I_{qS}: sonority current
- I_{qT}: current of movement
- O1: order
- O2: order
- O3: order
- O4: order
- O5: order
- O6: order
- O7: order
- O8: order
- PI: controller
- PT: Park transform
- RES: resolver
- RPM': revolutions per minute
- RPM": revolutions per minute
- SWM: modulator
- V_{d}: total voltage
- V_{DC}: modulation reference voltage
- V_{dS}: sonority voltage
- V_{q}: total voltage
- V_{qS}: sonority voltage
- θ: rotor position

## Claims

1. Road vehicle (1) comprising:
at least one electric motor (4);
an acoustic system (6) comprising at least one reproduction device (7) determined by a mechanical resonant element (9) configured to generate a sound (S) that is associated with the electric motor (4);
wherein the acoustic system (6) comprises:
the electric motor (4) mechanically connected to the reproduction device (7) and configured to excite a resonant frequency of the resonant element (9); and
a control unit (8) configured to control the electric motor (4) so as to inject at least one sonority current (I_{qS}, I_{dS}) or voltage (V_{qS}, V_{dS}) as an input of the electric motor (4) itself; the sonority current (I_{qS}, I_{dS}) or voltage (V_{qS}, V_{dS}) comprising a plurality of harmonics with different order;
wherein the at least one sonority current (I_{qS}, I_{dS}) or voltage (V_{qS}, V_{dS}) is configured to excite a frequency resulting in a vibration of the at least one reproduction device (7), which is configured to emit, due to the vibration, in the form of acoustic waves, a sound (S) as a function of the injected sonority current (I_{qS}, I_{dS}) or voltage (V_{qS}, V_{dS});
the vehicle being **characterized in that,** as the speed of the electric motor (4) changes, the control unit (8) is configured to change the harmonic orders of the at least one sonority current (I_{qS}, I_{dS}) or voltage (V_{qS}, V_{dS});
wherein the generated sound (S) is such that it is perceived from the outside and from the inside of the vehicle (1) as deriving from the dynamics of the electric motor (4).

2. Road vehicle (1) according to claim 1, wherein the reproduction device (7) is determined by a mechanical resonant element (9) arranged on board the road vehicle (1).

3. Road vehicle (1) according to claim 1 or 2, wherein the electric motor (4) is configured to bring one or two drive wheels (4) into rotation; wherein the control unit (8) is configured to inject simultaneously with the sonority current (I_{qS}, I_{dS}) or voltage (V_{qS}, V_{dS}), a current (I_{qT}, I_{dT}) of movement, determining the rotation of a rotor (10) of the electric motor (4) and thus of the one or two drive wheels (3) connected thereto.

4. Road vehicle (1) according to claim 3, wherein the sonority current (I_{qS}, I_{dS}) or voltage (V_{qS}, V_{dS}) has a frequency such that it does not interact with a magnetic flux of the electric motor (4), thereby avoiding generating movements of the rotor (10).

5. Road vehicle (1) according to any one of claims 1 to 4, wherein the resonant element (9) is a mechanical element (9) already arranged on board the vehicle (1), in particular any element (9) of an electric transmission comprising the electric motor (4).

6. Road vehicle (1) according to any one of the preceding claims, wherein the sonority current (I_{qS}, I_{dS}) or voltage (V_{qS}, V_{dS}) comprises at least one sinusoidal harmonic signal.

7. Road vehicle (1) according to any one of the preceding claims, wherein the acoustic system (6) comprises more than one reproduction device (7), wherein sonority current (I_{qS}, I_{dS}) or voltage (V_{qS}, V_{dS}) comprises a plurality of harmonics of different order and/or amplitude and/or frequency, so as to generate a polyphonic sound (S) by determining the vibration of different reproduction devices (7).

8. Road vehicle (1) according to any one of the preceding claims, wherein the control unit (8) is configured to vary the sonority current (I_{qS}, I_{dS}) or voltage (V_{qS}, V_{dS}) as a function of vehicular conditions, for example road roughness and/or open or closed sunroof.

9. Road vehicle (1) according to any one of the preceding claims, wherein the control unit (8) is configured to vary the sonority current (I_{qS}, I_{dS}) or voltage (V_{qS}, V_{dS}) as a function of driving parameters, for example the position of a button and/or a driving mode and/or the position or change in position of a pedal.

10. Road vehicle (1) according to any one of the preceding claims, wherein the control unit (8) is configured to vary the sonority current (I_{qS}, I_{dS}) or voltage (V_{qS}, V_{dS}) as a function of the driving style of a driver.

11. Road vehicle (1) according to any one of the preceding claims, wherein the sonority current (I_{qS}, I_{dS}) or voltage (V_{qS}, V_{dS}) is configured to excite the reproduction device (7) to generate an increasing or decreasing sonic ramp.

12. Road vehicle (1) according to claim 11, wherein the sonic ramp is adjusted as a function of at least the acceleration of the road vehicle (1).

13. A method for realizing a sound that is associated with a electric motor (4) in a road vehicle (1); the road vehicle (1) comprising at least one reproduction device (7) determined by a mechanical resonant element (9) configured to generate a sound that is associated with the electric motor (4), and the electric motor (4) being mechanically connected to the reproduction device (7) and configured to excite a resonant frequency of the resonant element (9);
the method comprising the step of:
- injecting a sonority current (I_{qS}, I_{dS}) or voltage (V_{qS}, V_{dS}) as an input of an electric motor (4); wherein the at least one sonority current (I_{qS}, I_{dS}) or voltage (V_{qS}, V_{dS}) excites a frequency resulting in a vibration of the at least one resonant element (9); the sonority current (I_{qS}, I_{dS}) or voltage (V_{qS}, V_{dS}) comprising a plurality of harmonics with different order;
wherein the resonant element (9) emits, due to the vibration, in the form of acoustic waves, a sound (S) as a function of the injected sonority current (I_{qS}, I_{dS}) or voltage (V_{qS}, V_{dS});
the method being **characterized in that**, as the speed of the electric motor (4) changes, the control unit (8) changes the harmonic orders of the at least one sonority current (I_{qS}, I_{dS}) or voltage (V_{qS}, V_{dS});
wherein the generated sound (S) is such that it is perceived from the outside and from the inside of the vehicle (1) as deriving from the dynamics of the electric motor (4).

14. Method according to claim 13 and comprising the further steps of:
- preliminarily defining orders of harmonics for the resonance of components of an electric transmission system comprising the electric motor (4) and the resonant element (9);
- experimentally carrying out a tuning of the sonority current (I_{qS}, I_{dS}) or voltage (V_{qS}, V_{dS}) so as to center resonance bands as a function of the electric transmission system.

## Patentansprüche

1. Straßenfahrzeug (1), umfassend:
mindestens einen Elektromotor (4);
ein Akustiksystem (6), umfassend mindestens eine Wiedergabevorrichtung (7), die durch ein mechanisches Resonanzelement (9) bestimmt ist, das ausgelegt ist,um ein Geräusch (S) zu erzeugen, das mit dem Elektromotor (4) assoziiert ist,
wobei das Akustiksystem (6) Folgendes umfasst:
den Elektromotor (4), der mechanisch mit der Wiedergabevorrichtung (7) verbunden und ausgelegt ist, um eine Resonanzfrequenz des Resonanzelements (9) anzuregen, und
eine Steuereinheit (8), die ausgelegt ist, um den Elektromotor (4) so zu steuern, dass mindestens ein Klangstrom (I_{qS}, I_{dS}) oder eine Klangspannung (V_{qS}, V_{dS}) als Eingang in den Elektromotor (4) eingespeist wird, wobei der Klangstrom (I_{qS}, I_{dS}) oder die Klangspannung (V_{qS}, V_{dS}) eine Vielzahl von Oberwellen unterschiedlicher Ordnung umfasst,
wobei der mindestens eine Klangstrom (I_{qS}, I_{dS}) oder die Klangspannung (V_{qS}, V_{dS}) ausgelegt ist, um eine Frequenz anzuregen, die eine Schwingung der mindestens einen Wiedergabevorrichtung (7) hervorruft, die ausgelegt ist, um aufgrund der Schwingung in der Form von Schallwellen ein Geräusch (S) in Abhängigkeit von dem eingespeisten Klangstrom (I_{qS}, I_{dS}) oder der Klangspannung (V_{qS}, V_{dS}) abzugeben,
wobei das Fahrzeug **dadurch gekennzeichnet ist, dass** die Steuereinheit (8) ausgelegt ist, um bei einer Änderung der Drehzahl des Elektromotors (4) die Oberwellenordnungen des mindestens einen Klangstroms (I_{qS}, I_{dS}) oder der Klangspannung (V_{qS}, V_{dS}) zu ändern,
wobei das erzeugte Geräusch (S) derart beschaffen ist, dass es sowohl von außen als auch von innen des Fahrzeugs (1) als von der Dynamik des Elektromotors (4) herrührend wahrgenommen wird.

2. Straßenfahrzeug (1) nach Anspruch 1, wobei die Wiedergabevorrichtung (7) durch ein an Bord des Straßenfahrzeugs (1) angeordnetes mechanisches Resonanzelement (9) bestimmt wird.

3. Straßenfahrzeug (1) nach Anspruch 1 oder 2, wobei der Elektromotor (4) ausgelegt ist, um ein oder zwei Antriebsräder (4) in Drehung zu versetzen, wobei die Steuereinheit (8) ausgelegt ist, um gleichzeitig mit dem Klangstrom (I_{qS}, I_{dS}) oder der Klangspannung (V_{qS}, V_{dS}) einen Bewegungsstrom (V_{qT}, V_{dT}) einzuspeisen, der die Drehung eines Rotors (10) des Elektromotors (4) und damit des einen oder der beiden damit verbundenen Antriebsräder (3) bestimmt.

4. Straßenfahrzeug (1) nach Anspruch 3, wobei der Klangstrom (I_{qS}, I_{dS}) oder die Klangspannung (V_{qS}, V_{dS}) eine Frequenz aufweist, sodass er bzw. sie nicht mit einem Magnetfluss des Elektromotors (4) in Wechselwirkung tritt, wodurch das Erzeugen von Bewegungen des Rotors (10) vermieden wird.

5. Straßenfahrzeug (1) nach einem der Ansprüche 1 bis 4, wobei das Resonanzelement (9) ein bereits an Bord des Fahrzeugs (1) angeordnetes mechanisches Element (9) ist, insbesondere ein beliebiges Element (9) eines elektrischen Antriebs, der den Elektromotor (4) umfasst.

6. Straßenfahrzeug (1) nach einem der vorhergehenden Ansprüche, wobei der Klangstrom (I_{qS}, I_{dS}) oder die Klangspannung (V_{qS}, V_{dS}) mindestens ein sinusförmiges Oberwellensignal umfasst.

7. Straßenfahrzeug (1) nach einem der vorhergehenden Ansprüche, wobei das Akustiksystem (6) mehr als eine Wiedergabevorrichtung (7) umfasst, wobei der Klangstrom (I_{qS}, I_{dS}) oder die Klangspannung (V_{qS}, V_{dS}) eine Vielzahl von Oberwellen unterschiedlicher Ordnung und/oder Amplitude und/oder Frequenz umfasst, sodass ein polyphones Geräusch (S) durch Bestimmen der Schwingung unterschiedlicher Wiedergabevorrichtungen (7) erzeugt wird.

8. Straßenfahrzeug (1) nach einem der vorhergehenden Ansprüche, wobei die Steuereinheit (8) ausgelegt ist, um den Klangstrom (I_{qS}, I_{dS}) oder die Klangspannung (V_{qS}, V_{dS}) in Abhängigkeit von Fahrzeugbedingungen, beispielsweise der Straßenunebenheit und/oder einem geöffneten oder geschlossenen Schiebedach, zu variieren.

9. Straßenfahrzeug (1) nach einem der vorhergehenden Ansprüche, wobei die Steuereinheit (8) ausgelegt ist, um den Klangstrom (I_{qS}, I_{dS}) oder die Klangspannung (V_{qS}, V_{dS}) in Abhängigkeit von Fahrparametern, beispielsweise der Position einer Taste und/oder eines Fahrmodus und/oder der Position oder einer Positionsänderung eines Pedals, zu variieren.

10. Straßenfahrzeug (1) nach einem der vorhergehenden Ansprüche, wobei die Steuereinheit (8) ausgelegt ist, um den Klangstrom (I_{qS}, I_{dS}) oder die Klangspannung (V_{qS}, V_{dS}) in Abhängigkeit vom Fahrstil eines Fahrers zu variieren.

11. Straßenfahrzeug (1) nach einem der vorhergehenden Ansprüche, wobei der Klangstrom(I_{qS}, I_{dS}) oder die Klangspannung (V_{qS}, V_{dS}) ausgelegt ist, um die Wiedergabevorrichtung (7) zur Erzeugung einer ansteigenden oder abfallenden Klangrampe anzuregen.

12. Straßenfahrzeug (1) nach Anspruch 11, wobei die Klangrampe in Abhängigkeit von zumindest der Beschleunigung des Straßenfahrzeugs (1) angepasst wird.

13. Verfahren zur Erzeugung eines Geräuschs, das mit einem Elektromotor (4) in einem Straßenfahrzeug (1) assoziiert ist, wobei das Straßenfahrzeug (1) mindestens eine Wiedergabevorrichtung (7) umfasst, die durch ein mechanisches Resonanzelement (9) bestimmt ist, das ausgelegt ist, um ein Geräusch zu erzeugen, das mit dem Elektromotor (4) assoziiert ist, wobei der Elektromotor (4) mechanisch mit der Wiedergabevorrichtung (7) verbunden und ausgelegt ist, um eine Resonanzfrequenz des Resonanzelements (9) anzuregen,
wobei das Verfahren den folgenden Schritt umfasst:
- Einspeisen eines Klangstroms (I_{qS}, I_{dS}) oder einer Klangspannung (V_{qS}, V_{dS}) als Eingang eines Elektromotors (4), wobei der mindestens eine Klangstrom (I_{qS}, I_{dS}) oder die Klangspannung (V_{qS}, V_{dS}) eine Frequenz anregt, die eine Schwingung des mindestens einen Resonanzelements (9) hervorruft, wobei der Klangstrom (I_{qS}, I_{dS}) oder die Klangspannung (V_{qS}, V_{dS}) eine Vielzahl von Oberwellen unterschiedlicher Ordnung umfasst,
wobei das Resonanzelement (9) aufgrund der Schwingung in Form von Schallwellen ein Geräusch (S) in Abhängigkeit des eingespeisten Klangstroms (I_{qS}, I_{dS}) oder der Klangspannung (V_{qS}, V_{dS}) abgibt,
wobei das Verfahren **dadurch gekennzeichnet ist, dass** die Steuereinheit (8) bei einer Änderung der Drehzahl des Elektromotors (4) die Oberwellenordnungen des mindestens einen Klangstroms (I_{qS}, I_{dS}) oder der Klangspannung (V_{qS}, V_{dS}) ändert,
wobei das erzeugte Geräusch (S) derart beschaffen ist, dass es sowohl von außen als auch von innen des Fahrzeugs (1) als von der Dynamik des Elektromotors (4) herrührend wahrgenommen wird.

14. Verfahren nach Anspruch 13, umfassend mindestens die folgenden weiteren Schritte:
- vorläufiges Definieren von Oberwellenordnungen für die Resonanz von Komponenten eines elektrischen Übertragungssystems, umfassend den Elektromotor (4) und das Resonanzelement (9);
- experimentelles Durchführen einer Abstimmung des Klangstroms (I_{qS}, I_{dS}) oder der Klangspannung (V_{qS}, V_{dS}), sodass Resonanzbänder in Abhängigkeit von dem elektrischen Übertragungssystem zentriert werden.

## Revendications

1. Véhicule routier (1) comprenant :
au moins un moteur électrique (4) ;
un système acoustique (6) comprenant au moins un dispositif de reproduction (7) déterminé par un élément résonant mécanique (9) conçu pour générer un son (S) étant associé au moteur électrique (4) ;
le système acoustique (6) comprenant :
le moteur électrique (4), relié mécaniquement au dispositif de reproduction (7) et conçu pour exciter une fréquence de résonance de l'élément résonant (9) ; et
une unité de commande (8) configurée pour commander le moteur électrique (4) de manière à injecter au moins un courant de sonorité (I_{qS}, I_{dS}) ou une tension de sonorité (V_{qS}, V_{dS}) en entrée du moteur électrique (4) lui-même ; le courant de sonorité (I_{qS}, I_{dS}) ou la tension de sonorité (V_{qS}, V_{dS}) comprenant une pluralité d'harmoniques d'ordres différents ;
l'au moins un courant de sonorité(I_{qS}, I_{dS}) ou une tension de sonorité (V_{qS}, V_{dS}) étant configuré(e) pour exciter une fréquence entraînant une vibration de l'au moins un dispositif de reproduction (7), lequel est configuré pour émettre, sous l'effet de la vibration, sous forme d'ondes acoustiques, un son (S) en fonction du courant de sonorité injecté (I_{qS}, I_{dS}) ou de la tension de sonorité injectée (V_{qS}, V_{dS}) ;
le véhicule étant **caractérisé en ce que**, lorsque la vitesse du moteur électrique (4) varie, l'unité de commande (8) est configurée pour modifier les ordres harmoniques de l'au moins un courant de sonorité (I_{qS}, I_{dS}) ou une tension de sonorité (V_{qS}, V_{dS}) ;
le son généré (S) étant tel qu'il est perçu, tant à l'extérieur qu'à l'intérieur du véhicule (1), comme dérivant de la dynamique du moteur électrique (4).

2. Véhicule routier (1) selon la revendication 1, le dispositif de reproduction (7) étant déterminé par un élément résonant mécanique (9) disposé à bord du véhicule routier (1).

3. Véhicule routier (1) selon la revendication 1 ou 2, le moteur électrique (4) étant configuré pour entraîner en rotation une ou deux roues motrices (4) ; l'unité de commande (8) étant configurée pour injecter simultanément, avec le courant de sonorité (I_{qS}, I_{dS}) ou la tension de sonorité (V_{qS}, V_{dS}), un courant (V_{qT}, V_{dT}) de mouvement, déterminant la rotation d'un rotor (10) du moteur électrique (4) et donc de la ou des deux roues motrices (3) qui y sont reliées.

4. Véhicule routier (1) selon la revendication 3, le courant de sonorité (I_{qS}, I_{dS}) ou la tension de sonorité (V_{qS}, V_{dS}) présentant une fréquence telle qu'il/elle n'interagit pas avec le flux magnétique du moteur électrique (4), évitant ainsi de générer des mouvements du rotor (10).

5. Véhicule routier (1) selon l'une quelconque des revendications 1 à 4, l'élément résonant (9) étant un élément mécanique (9) déjà disposé à bord du véhicule (1), en particulier tout élément (9) d'une transmission électrique comprenant le moteur électrique (4).

6. Véhicule routier (1) selon l'une quelconque des revendications précédentes, le courant de sonorité (I_{qS}, I_{dS}) ou la tension de sonorité (V_{qS}, V_{dS}) comprenant au moins un signal harmonique sinusoïdal.

7. Véhicule routier (1) selon l'une quelconque des revendications précédentes, le système acoustique (6) comprenant plus d'un dispositif de reproduction (7), le courant de sonorité (I_{qS}, I_{dS}) ou la tension de sonorité (V_{qS}, V_{dS}) comprenant une pluralité d'harmoniques d'ordre et/ou d'amplitude et/ou de fréquence différents, de manière à générer un son polyphonique (S) en déterminant la vibration de différents dispositifs de reproduction (7).

8. Véhicule routier (1) selon l'une quelconque des revendications précédentes, l'unité de commande (8) étant configurée pour faire varier le courant de sonorité (I_{qS}, I_{dS}) ou la tension de sonorité (V_{qS}, V_{dS}) de sonorité en fonction des conditions d'utilisation du véhicule, par exemple la rugosité de la route et/ou l'ouverture ou la fermeture du toit ouvrant.

9. Véhicule routier (1) selon l'une quelconque des revendications précédentes, l'unité de commande (8) étant configurée pour faire varier le courant de sonorité (I_{qS}, I_{dS}) ou la tension de sonorité (V_{qS}, V_{dS}) en fonction de paramètres de conduite, par exemple la position d'un bouton et/ou d'un mode de conduite et/ou la position ou le changement de position d'une pédale.

10. Véhicule routier (1) selon l'une quelconque des revendications précédentes, l'unité de commande (8) étant configurée pour faire varier le courant de sonorité (I_{qS}, I_{dS}) ou la tension de sonorité (V_{qS}, V_{dS}) en fonction du style de conduite d'un conducteur.

11. Véhicule routier (1) selon l'une quelconque des revendications précédentes, le courant de sonorité (I_{qS}, I_{dS}) ou la tension de sonorité (V_{qS}, V_{dS}) étant configuré(e) pour exciter le dispositif de reproduction (7) afin de générer une rampe sonore croissante ou décroissante.

12. Véhicule routier (1) selon la revendication 11, la rampe sonore étant réglée en fonction au moins de l'accélération du véhicule routier (1).

13. Procédé permettant de produire un son étant associé à un moteur électrique (4) dans un véhicule routier (1) ; le véhicule routier (1) comprenant au moins un dispositif de reproduction (7) déterminé par un élément résonnant mécanique (9) configuré pour générer un son étant associé au moteur électrique (4), et le moteur électrique (4) étant relié mécaniquement au dispositif de reproduction (7) et configuré pour exciter une fréquence de résonance de l'élément résonnant (9) ;
le procédé comprenant l'étape suivante :
- l'injection d'un courant de sonorité (I_{qS}, I_{dS}) ou d'une tension de sonorité (V_{qS}, V_{dS}) en entrée d'un moteur électrique (4) ; l'au moins un courant de sonorité (I_{qS}, I_{dS}) ou une tension de sonorité (V_{qS}, V_{dS}) excitant une fréquence entraînant une vibration de l'au moins un élément résonant (9) ; le courant de sonorité (I_{qS}, I_{dS}) ou la tension de sonorité (V_{qS}, V_{dS}) comprenant une pluralité d'harmoniques d'ordres différents ;
l'élément résonant (9) émettant, sous l'effet de la vibration, sous forme d'ondes acoustiques, un son (S) en fonction du courant de sonorité injecté (I_{qS}, I_{dS}) ou de la tension de sonorité injectée (V_{qS}, V_{dS}) ;
le procédé étant **caractérisé en ce que**, lorsque la vitesse du moteur électrique (4) varie, l'unité de commande (8) modifie les ordres harmoniques de l'au moins un courant de sonorité (I_{qS}, I_{dS}) ou une tension de sonorité (V_{qS}, V_{dS}) ;
le son généré (S) étant tel qu'il est perçu, tant à l'extérieur qu'à l'intérieur du véhicule (1), comme dérivant de la dynamique du moteur électrique (4).

14. Procédé selon la revendication 13, comprenant en outre les étapes suivantes :
- la définition, de manière préliminaire, des ordres d'harmoniques pour la résonance des composants d'un système de transmission électrique comprenant le moteur électrique (4) et l'élément résonant (9) ;
- l'exécution, de manière expérimentale, d'un réglage du courant de sonorité (I_{qS}, I_{dS}) ou de la tension de sonorité (V_{qS}, V_{dS}) afin de centrer les bandes de résonance en fonction du système de transmission électrique.
